# EUROPEAN PATENT APPLICATION

(11) **EP 4 764 610 A2**
(43) Date of publication of application: **24.06.2026**
(21) Application number: 25216703.6
(22) Date of filing: 18.11.2025
(51) Int. Cl.: G01S 19/21, G01S 19/36

(54) **CONTROLLED RECEPTION PATTERN ANTENNA CONTROLLER INSERT**

(30) Priority: 23.12.2024 US 202418999442
(71) Applicant: The Boeing Company, Arlington, VA 22202 (US)
(72) Inventor: MURPHY, Timothy Allen, ARLINGTON, 22202 (US); LOFQUIST, David B, ARLINGTON, 22202 (US); TIMMERMAN, Lucca Bryce, ARLINGTON, 22202 (US)
(74) Representative: Plasseraud IP

(57) **Abstract**

A device includes a housing. a first interface on a first side of the housing, a second interface on a second side of the housing opposite the first side, and circuitry within the housing. The first interface is configured to couple to a multimode receiver (MMR) rack. The second interface is configured to couple to a MMR external to the housing. The circuitry is configured to receive, via the first interface, digital data representing navigation signals received at an antenna. The circuitry is configured to perform time, space and frequency filtering operations using the digital data to generate modified digital data. The circuitry is configured to output modified analog navigation signals, based on the modified digital data, to the MMR via the second interface.

## Description

### FIELD OF THE DISCLOSURE

The present disclosure is generally related to a radio device that includes a controlled reception pattern antenna controller insert.

### BACKGROUND

As technology advances, global positioning satellite (GPS)-based navigation systems, such as a Global Navigation Satellite System (GNSS), have become a common type of navigation system employed by aircraft and other long-range vehicles. GPS-based navigation systems use radio communications from satellites to an aircraft to derive accurate location information for the aircraft during flight. GPS-based navigation systems have grown in popularity due to their accuracy and reliability, as well as being easier and cheaper to deploy and calibrate than other types of navigation systems. However, GPS-based navigation systems can have some drawbacks, including being unable to function in areas in which the availability and quality of satellite signals is insufficient, as well as experiencing interference from other wireless communications and the possibility of being jammed or spoofed by malicious entities.

One approach to combatting drawbacks such as interference, jamming, and spoofing is the use of a controlled reception pattern antenna (CRPA) that can modify its reception pattern to improve navigation signal reception. For example, the reception pattern can change to focus on areas of high-quality signal strength, to negate areas identified as an interference source, etc. However, the use of CRPA for commercial aircraft has been limited due to requirements to replace antennas, receivers, signal processing, etc. Such maintenance-intensive operations can limit the availability of aircraft for commercial operators.

### SUMMARY

In a particular implementation, a device includes a housing. The device also includes a first interface on a first side of the housing. The first interface is configured to couple to a multimode receiver (MMR) rack. The device also includes a second interface on a second side of the housing opposite the first side. The second interface is configured to couple to a MMR external to the housing. The device also includes circuitry within the housing. The circuitry is configured to receive, via the first interface, digital data representing navigation signals received at an antenna. The circuitry is also configured to perform time, space and frequency filtering operations using the digital data to generate modified digital data. The circuitry is also configured to output modified analog navigation signals based on the modified digital data, to the MMR via the second interface.

In another particular implementation, an aircraft includes an antenna, a multimode receiver (MMR), an MMR rack coupled via a communication link to the antenna, and a line replaceable unit (LRU) disposed between the MMR and the MMR rack. The LRU includes a housing. The LRU also includes a first interface on a first side of the housing. The first interface is configured to couple to a multimode receiver (MMR) rack. The LRU also includes a second interface on a second side of the housing opposite the first side. The second interface is configured to couple to a MMR external to the housing. The LRU also includes circuitry within the housing. The circuitry is configured to receive, via the first interface, digital data representing navigation signals received at an antenna. The circuitry is also configured to perform time, space and frequency filtering operations using the digital data to generate modified digital data. The circuitry is also configured to output modified analog navigation signals based on the modified digital data, to the MMR via the second interface.

In another particular implementation, a method includes receiving, via a first interface on a first side of a housing, digital data representing navigation signals received at an antenna. The method also includes performing time, space and frequency filtering operations using the digital data to generate modified digital data. The method also includes outputting, via a second interface on a second side of the housing, modified analog navigation signals to a multimode receiver (MMR) external to the housing and coupled to the second interface, wherein the modified analog navigation signals are based on the modified digital data.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 depicts an example of a system that includes a CRPA controller insert disposed within an aircraft according to one or more examples of the subject disclosure.
FIG. 2 illustrates an example system that includes an exemplary CRPA controller insert coupled to an exemplary antenna via a first interface and the MMR rack, in accordance with some examples of the subject disclosure.
FIG. 3 illustrates an example system that includes an exemplary CRPA controller insert and an exemplary MMR, in accordance with some examples of the subject disclosure.
FIG. 4 illustrates an example system that includes the antenna coupled to the MMR via the communication link and the CRPA controller insert disposed between the MMR and the MMR rack, in accordance with some examples of the subject disclosure.
FIG. 5 is a flowchart that illustrates an example of a method for operating a CRPA controller insert, in accordance with some examples of the subject disclosure.
FIG. 6 is a flowchart illustrative of an example of a life cycle of an aircraft that includes a CRPA controller insert, in accordance with some examples of the subject disclosure.
FIG. 7 is a block diagram of a particular implementation of the aircraft associated with the life cycle of FIG. 6.
FIG. 8 is a block diagram of a computing environment including a computing device configured to support aspects of computer-implemented methods and computer-executable program instructions (or code) according to the present disclosure.

### DETAILED DESCRIPTION

Aspects disclosed herein describe systems and methods for providing a controlled reception pattern antenna (CRPA) controller insert. The CRPA controller insert can be implemented to provide anti-jam, anti-spoofing capabilities in a manner that is transparent to existing equipment and requires no wiring changes or impacts to downstream user equipment in an aircraft.

According to some aspects of the subject disclosure, a CRPA controller insert is described for a Global Navigation Satellite System (GNSS) and can be particularly beneficial to affordably retrofit commercial air transport aircraft. The systems and methods disclosed herein include a digital CRPA where down-conversion and digitization of radio frequency (RF) signals from the antenna elements in the GNSS band are performed in the antenna array near the individual antenna elements. The resultant In-phase and Quadrature baseband samples (I and Q samples) are then serialized and modulated onto a signal that is used to transmit the information from the multiple antenna elements to the GNSS signal processor over a single RF cable. At the processor, the bit stream is demodulated and deserialized to reconstruct the individual I and Q samples for each of the individual antenna elements.

Certain implementations of the systems and methods disclosed herein make the installation of a CRPA more simple and less expensive. For example, a single cable is used to connect an antenna array assembly to a GNSS processing unit. The antenna assembly can replace an existing antenna on an existing design and the CRPA processing can be achieved without mounting an additional line replaceable unit (LRU) near the antenna array and managing multiple GNSS antenna element connections. Furthermore, an existing RF cable can be used to connect the digital CRPA to the CRPA processing significantly lowering the difficulty and cost of retrofit.

In a particular configuration, the CRPA controller insert described herein (and methods of operating the same) support a resource-efficient means of retrofitting commercial aircraft that use standard Aeronautical Radio, Inc. (ARINC) configurations for the GNSS antennas. (ARINC is a registered trademark of Arinc, Inc., a Delaware corporation) These standards include ARINC 743 for a global positioning system antenna and ARINC 755 for a Multi-Mode Receiver, which is a ubiquitous means used to include GNSS receiver into large commercial aircraft.

A technical advantage of the subject disclosure includes providing a resource-efficient means of retrofitting an aircraft to better support anti-jamming and anti-spoofing technologies for in-flight navigation. The systems and methods disclosed herein enable a digital CRPA to be a drop-in line replaceable solution for retrofit on existing commercial aircraft. Taking an airplane out of service can be a significant part of the cost of retrofitting any system. By enabling a drop-in replacement without need for any wiring changes, the systems and methods disclosed herein enable a more affordable CRPA for commercial aircraft (and potentially military derivatives). For example, the digital CRPA and CRPA controller insert described herein could be installed in an aircraft during an overnight turn without need to remove the airplane from service.

Another technical advantage of the subject disclosure includes providing support for digital CRPA-enabled anti-jamming and anti-spoofing technologies by providing sufficient operating power to the digital CRPA without requiring modification or replacement of an aircraft's existing receiver. Certain existing multimode receivers (MMRs) don't provide sufficient power on the center conductor coupling the receiver to the CRPA to power the digital CRPA. Mounting a direct current block and alternative power input would raise the risk that performing the aircraft retrofit would extend beyond an overnight turn. The CRPA controller insert described herein introduces a new LRU that would be inset between existing MMRs and the rack plug for the MMR.

Yet another technical advantage of the subject disclosure includes providing support for digital CRPA-enabled anti-jamming and anti-spoofing technologies by enabling those technologies to be used at appropriate times and at appropriate accuracies depending on flight status. For example, the CRPA controller insert described herein is controllable according to the operating mode of the MMR. The anti-jamming and anti-spoofing capabilities provided by the CRPA controller insert may need to be modified depending on the operating mode. For example, signal nulling may need to be suppressed during flight operations that require very high position solution accuracy (e.g., a precision approach). Certain signal nulling algorithms based on power minimization can induce GNSS signal tracking errors if a null is produced close to the direction of arrival of a satellite. The systems and methods disclosed herein can enable the CRPA controller insert to be aware of the operating mode or state of the MMR and to be controlled accordingly.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

Particular implementations are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter.

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, a system may be described herein as including one or more computing devices ("computing device(s)"), which indicates that in some implementations the system includes a single computing device and in other implementations the system includes multiple computing devices. For ease of reference herein, such features are generally introduced as "one or more" features, and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

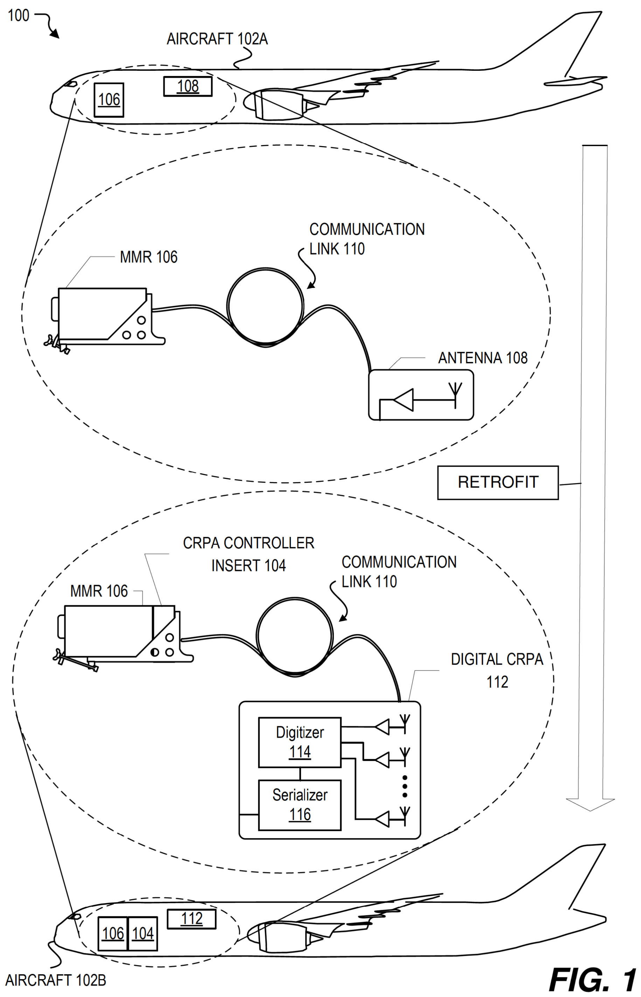

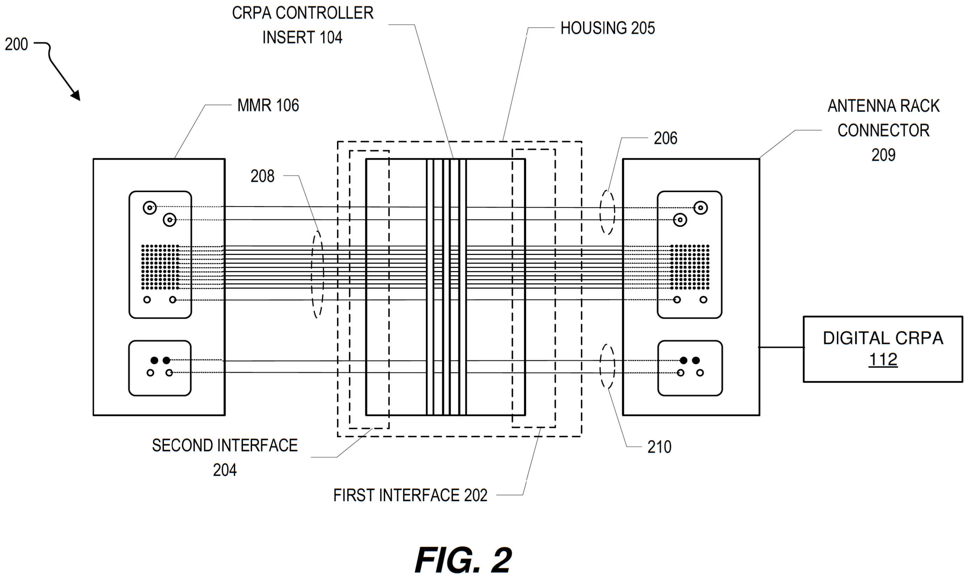

FIG. 1 depicts an example of a system 100 that includes CRPA controller insert 104 disposed within an aircraft according to one or more examples of the subject disclosure. The CRPA controller insert 104 can serve as an exemplary retrofit for the aircraft to enable a resource-efficient means of providing digital CRPA-enabled anti-jamming and anti-spoofing technologies, as described in more detail below with reference to FIGs. 2-8. In the example system 100, after a retrofit of the aircraft, the CRPA controller insert 104 is coupled to a multimode receiver (MMR) 106 via a first interface and to an digital CRPA 112 via a second interface. In some implementations, as described below, the second interface of the CRPA controller insert 104 can connect to an MMR rack, which is then coupled to the digital CRPA 112 via a communication link. In some aspects, the digital CRPA 112 can include, for example, an array of antennas, one or more components configured to provide low-noise amplification, digitization, down-conversion, serialization, modulation, etc.

FIG. 1 illustrates an expanded view of the MMR 106 before and after a retrofit for the aircraft. The illustration of the system 100 in a first state prior to a retrofit of the aircraft includes an aircraft 102A that includes the MMR 106 coupled to an antenna 108 via a communication link 110. The antenna 108 can, in some configurations, include a single frequency antenna and in other cases the antenna can include dual frequency capability. For example, the antenna 108 can include an ARINC active single-channel/single-frequency fixed reception pattern antenna (FRPA) global positioning system (GPS) antenna system. The MMR 106 can, in some configurations, be a receiver that complies with the ARINC 755 standard for multimode receivers. The communication link 110 can include a coaxial cable or other means of communicating RF signals from the antenna 108 to the MMR 106. In some implementations, the MMR 106 is mounted in an MMR rack that provides connectivity from the MMR 106 to various other components of the system 100.

The illustration of the system 100 in a second state after the retrofit of the aircraft includes an aircraft 102B that includes the MMR 106 coupled to the digital CRPA 112 via the MMR rack, the CRPA controller insert 104, and the communication link 110. In some implementations, the digital CRPA 112 can include an active multi-channel CRPA GPS antenna system. The multi-channel antenna system can be a single-frequency antenna system, a multi-frequency antenna system, or can include one or more of each. In a particular configuration, the digital CRPA 112 can be compliant with the footprint and/or mounting hold pattern provided in the ARINC 743 standard for GNSS antennae.

In some aspects, the digital CRPA 112 can include a plurality of receiving elements coupled to a digitizer 114. The digitizer 114 can be one or more electronic components configured to digitize, and down-convert to baseband, the navigation signals received at one or more of the plurality of receiving elements. The digitizer 114 can also be configured to communicate a series of in-phase and quadrature samples (I and Q samples) to a serializer 116 of the digital CRPA 112. The serializer 116 can include one or more electronic components configured to serialize the I and Q samples received from the digitizer 114 for communication to the CRPA controller insert 104 via the communication link 110. In a particular configuration, the digital CRPA 112 can include at least twelve-bit analog-to-digital converters, resulting in a set of twelve-bit I and Q samples. The serializer 116 can be configured to take the I and Q sample, place them in order, and interleave them to provide a single stream of bits.

As described in more detail below with reference to FIGs. 2-9, the CRPA controller insert 104 can include a housing, a first interface coupled to the MMR rack 107 on a first side of the housing, and a second interface coupled to the MMR 106 on a second side of the housing. The CRPA controller insert 104 can also include circuitry within the housing configured to receive, via the first interface, digital data representing navigation signals received at the digital CRPA 112. The circuitry can also be configured to perform time, space and frequency filtering operations using the digital data to generate modified digital data and reconstruct (e.g., via digital-to-analog conversion and upconversion) an analog RF output containing modified analog navigation signals, based on the modified digital data, to the MMR 106 via the second interface. The time, space, and frequency filtering operations can include, for example, beamforming, null-steering, frequency excision, pulse elimination, and other appropriate operations to alter the signal reception in Time, Space and Frequency.

FIG. 2 illustrates an example system 200 that includes an exemplary CRPA controller insert 104 coupled to an exemplary antenna rack connector 209 via a first interface 202 and an MMR rack, in accordance with some examples of the subject disclosure. The CRPA controller insert 104 is also coupled to the MMR 106 via a second interface 204. The CRPA controller insert 104 includes a housing 205, with the first interface 202 on a first side of the housing 205 and the second interface 204 on a second side of the housing 205.

In some implementations, the antenna rack connector 209 can be coupled to, integrated with, or otherwise associated with an MMR rack. The antenna rack connector 209 can include a plurality of interfacing connectors. At least one of the interfacing connectors can be coupled to the digital CRPA 112. For example, the antenna rack connector 209 can be coupled to the digital CRPA 112 via a single coaxial cable.

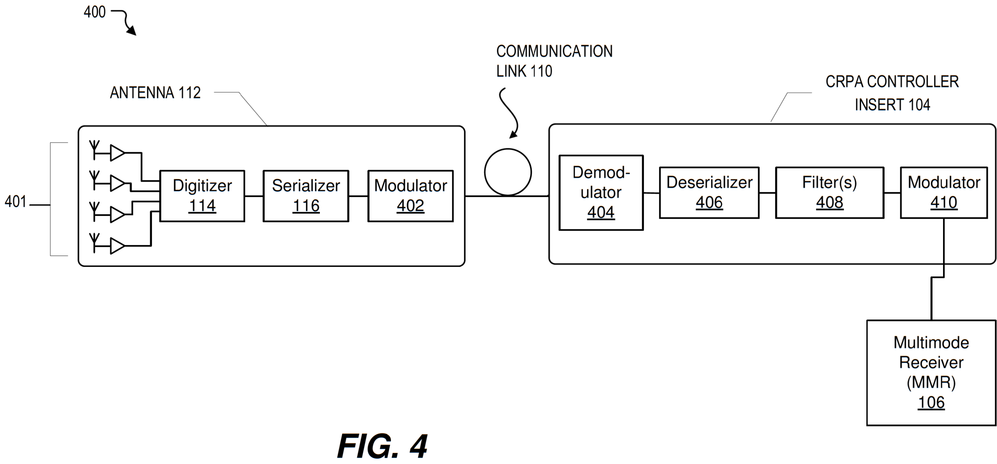

In some implementations, the CRPA controller insert 104 includes a plurality of interfacing connectors. In some aspects, one or more printed circuit boards can be layered between the connectors to house the circuitry needed to service the antenna rack connector 209 and, by extension, the MMR rack and the digital CRPA 112 (e.g., to perform the spatial interference filtering, as described in more detail below with reference to FIG. 4). The plurality of interfacing connectors can allow for certain signals incoming to the CRPA controller insert 104 to be passed through to an output in a manner that minimizes insertion loss. Other interfacing connectors can allow for certain signals incoming to the CRPA controller insert 104 to be intercepted, processed, and used in controlling the CRPA controller, or in some cases communicated to an output. Other interfacing connectors can allow for reading of digital data that can be passed through, processed, modified, added to, etc,. before communicating to an output. Certain coaxial connectors in the rack connector assembly connect the MMR 106 to antennas for the other systems included in the MMR (i.e., instrument landing system components such as a localizer, very high frequency omnirange receiver, glid path determination, glide scope determination, etc.). These coaxial channels can pass through the second interface 204 of the CRPA controller insert 104 to the MMR 106 in a manner that minimizes insertion loss so as not to degrade the functioning of the other receivers included in the MMR.

In some aspects, the system 200 includes a first plurality of signal paths 206 corresponding to an RF signal communicated to the CRPA controller insert 104 from the digital CRPA 112 via the first interface 202the MMR 106 via the second interface 204; or both. The CRPA controller insert 104 can be configured to receive, via the first interface 202, digital data representing a navigation signal received at the digital CRPA 112. The CRPA controller insert 104 can be configured to perform time, space and frequency filtering operations using the digital data to generate modified digital data, as described in more detail below with reference to FIG. 4. The CRPA controller insert 104 can also be configured to output modified analog RF navigation signals based on the modified digital data to the MMR 106 via the second interface 204.

For example, the CRPA controller insert 104 can receive, via the first interface 202, digital data representing a GNSS signal from the digital CRPA 112. This signal can be intercepted and processed-including time, space and frequency filtering operations-by certain circuitry of the CRPA controller insert 104, as described in more detail below with reference to FIG. 4. The CRPA controller insert 104 can then output the modified analog navigation signals to the MMR 106 via the second interface 204.

In some implementations, the system 200 also includes a second plurality of signal paths 208 corresponding to various digital signals communicated to the CRPA controller insert 104 from various aircraft system via the antenna rack connector 209 and/or the digital CRPA 112 via the first interface 202, from the MMR 106 via the second interface 204, or both. The signals on the second plurality of signal paths 208 are passed through the CRPA controller insert 104 with or without modification. For example, a voltage on one of the signals of the second plurality of signal paths 208 can be read by the CRPA controller insert 104 to acquire information. This can include, for example, receiving labels from the MMR 106 (e.g., receiver state, position information, etc.), labels going to the MMR 106 from other aircraft systems (e.g., pitch, roll, heading, etc.). As another example, certain signals (e.g., ARINC 429 bus signals) can be intercepted such that labels can be added, deleted, or modified as needed to support certain functionality of the CRPA controller insert 104. In order to read and/or modify a signal on one or more of the second plurality of signal paths 208, in some aspects the second interface 204 includes a plurality of connectors including at least one connector configured to couple to an aircraft bus and at least one connector configured to couple to the digital CRPA 112.

In some implementations, the system 200 also includes a third plurality of signal paths 210 corresponding to various RF signals communicated to the CRPA controller insert 104 from the antenna rack connector 209 and/or the digital CRPA 112 via the first interface 202, from the MMR 106 via the second interface 204, or both. The signals on the third plurality of signal paths 210 are passed through the CRPA controller insert 104 in a manner than minimizes insertion loss. For example, RF connections for other functions of the MMR 106 (e.g., a very high frequency (VHF) connector for VHF omnidirectional range (VOR), VHF digital broadcast (VDB) functions, etc.) can be passed through the CRPA controller insert 104 in a manner that introduces as little insertion loss as possible.

In some implementations, the first interface 202 includes a first plurality of connectors and the second interface 204 includes a second plurality of connectors. The first plurality of connectors are complementary to connectors of the antenna rack connector 209 and the second plurality of connectors are complementary to the first plurality of connectors. The complementary connectors can enable signals from the antenna rack connector 209 and/or the MMR 106 to pass through the CRPA controller insert 104.

Although FIG. 2 illustrates certain components of the system 200 arranged in a particular manner, other components in different configurations are possible without departing from the scope of the subject disclosure. For example, a particular CRPA controller insert 104 may not include the first, second, and third plurality of signals. As another example, the CRPA controller insert 104 can also include circuitry that is configured to provide power to the digital CRPA 112 via the antenna rack connector 209 via the first interface 202.

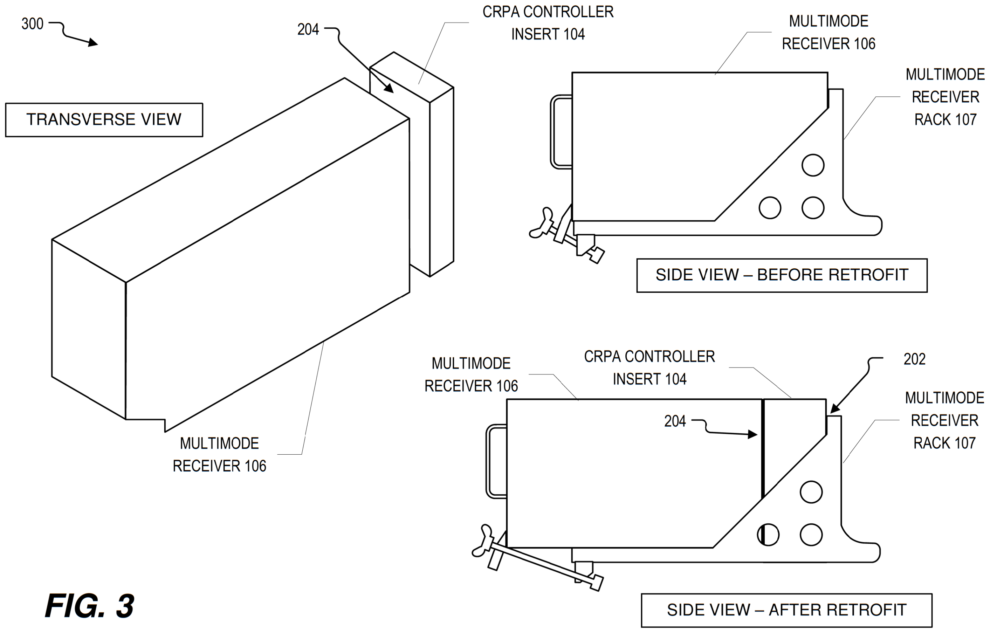

FIG. 3 illustrates an example system 300 that includes an exemplary CRPA controller insert 104 and an exemplary MMR 106, in accordance with some examples of the subject disclosure. FIG. 3 illustrates a transverse view of the CRPA controller insert 104 that is configured to be coupled via the first interface 202 to the MMR 106. FIG. 3 also illustrates a side view of the system 300 in a first state before a retrofit of an aircraft (e.g., the aircraft of FIG. 1), including the insertion of the CRPA controller insert 104 between the MMR 106 and the MMR rack 107. FIG. 3 also illustrates a side view of the system 300 in a second state after the retrofit of the aircraft, including the insertion of the CRPA controller insert 104 between the MMR 106 and the MMR rack 107. As shown in the side view after retrofit, the CRPA controller insert 104 is coupled to the MMR 106 via the second interface 204 and the CRPA controller insert 104 is coupled to the MMR rack 107 via the first interface 202. In some implementations, the CRPA controller insert 104 can include a line-replaceable unit (LRU) disposed between the MMR 106 and the MMR rack 107.

FIG. 4 illustrates an example system 400 that includes the digital CRPA 112 coupled to the CRPA Controller Insert 104 via the communication link 110 and the CRPA controller insert 104 is in turn connected to the MMR 106 of FIGs. 1-3, in accordance with some examples of the subject disclosure.

In some implementations, the digital CRPA 112 can include one or more receiving elements 401 coupled to the digitizer 114. The receiving elements 401 can be configured to receive one or more RF signals received at the digital CRPA 112. For example, the receiving elements 401 can be configured to receive one or more navigation signals as part of a global navigation satellite system (GNSS). As described above with reference to FIG. 1, the digitizer 114 can be configured to down-convert to baseband and digitize the RF signals received at the receiving elements 401. In some implementations, the one or more components of the digital CRPA 112 /configured to down-convert the RF signals can be part of the digitizer 114, separate from the digitizer 114, or a combination thereof.

In some implementations, the digitizer 114 can be coupled to the serializer 116. As described above with reference to FIG. 1, the serializer 116 can be configured to serialize the output of the digital samples from the digitizer 114 for communication to a modulator 402 coupled to the serializer 116. The modulator 402 can be configured to modulate the serialized output of the serializer 116 onto a signal that can be used to transmit the information from the received RF signal(s) over the communication link 110.

As an illustrative operational example, the digital CRPA 112 can be configured as a digital CRPA receiving navigation signals as part of a GNSS. The digital CRPA 112 can be configured to down-convert and digitize the RF signals in the GNSS band (received at the receiving elements 401) at the digital CRPA 112 near the individual receiving elements 401. Resultant in-phase and quadrature samples (i.e., I and Q samples) are then serialized and modulated onto a signal that is used to transmit information to a GNSS signal processor over the communication link 110.

In some implementations, the system 400 can also include the CRPA controller insert 104 coupled to the digital CRPA 112 via the communication link 110 (e.g., via the first interface 202 of FIG. 2). The CRPA controller insert 104 can include a demodulator 404 configured to demodulate the signal received from the digital CRPA 112 via the communication link 110. The demodulator 404 can communicate the demodulated signal to a deserializer 406, which can include circuitry configured to deserialize the demodulated signal. The deserializer 406 can communicate the deserialized, demodulated signal to one or more filters 408. In some implementations, the filter(s) 408 can include circuitry configured to perform time, space and frequency filtering operations using the received digital data to generate modified digital data. The filter(s) 408 can communicate the modified digital data to a modulator 410, which can include circuitry configured to modulate the modified digital data onto a signal for communication to the MMR 106 (e.g., via the second interface 204 of FIG. 2).

For example, the demodulator 404 can be configured to receive digital data representing navigation signals received at the digital CRPA 112 via the first interface (e.g., the first interface 202 of FIG. 2). The received digital data can be received as a first modulated analog signal (e.g., as modulated by the modulator 402). The demodulator 404 can be configured to generate a sequence of bits based on the first modulated analog signal. The deserializer 406 can be configured to generate, based on the sequence of bits, two or more parallel steams of I and Q samples representing the received navigation signals received, respectively, at two or more receiving elements 401 of the digital CRPA 112. The time, space and frequency filter(s) 408 can be configured to perform the time, space and frequency filtering operations based on the two or more parallel sample streams. The modulator 410 can be configured to modulate a reconstructed analog RF signal based on the modified digital data to generate the modified analog navigation signals.

In some aspects, the filter(s) 408 can include circuitry to perform the beamforming and null steering operations, where the circuitry is configured to spatially filter the digital data such that components of received signals from one or more directions, as received at the digital CRPA 112, are attenuated in the modified analog navigation signals based on the modified digital data.

In the same or alternative aspects, the filter(s) 408 can include circuitry to perform the time, space and frequency filtering operations, where the circuitry is configured to perform interference detection operations based on the digital data. In some configurations, the circuitry can be configured to generate a null directed toward an interference source. In the same or alternative configurations, to perform detection operations, the circuitry can be configured to determine, based on the digital data, signal power and an angle of arrival (AOA) of at least a subset of signals of the navigation signals received at the digital CRPA 112. The circuitry can be configured to compare the signal power, the AOA, or both, of at least the subset of signals to expected signal characteristics of the navigation signals. If for example, the signal power, the AOA, or both of at least the subset of signals is higher than the expected signal characteristics of the navigation signals, the system 400 can be configured to identify the direction of an interference or spoofing source. The circuitry can be, in some configurations, configured to generate a null directed toward the identified interference or spoofing source.

The circuitry can also be configured to, in response to detecting that the navigation signals include spoofed navigation signals, output data via the first interface (e.g., the first interface 202 of FIG. 2), the second interface (e.g., the second interface 204 of FIG. 2), or both, to prevent one or more aircraft systems from using navigation data based on the navigation signals.

The circuitry can also be configured to output an alert (e.g., via the first interface 202 of FIG. 2, the second interface 204 of FIG. 2, or both) in response to detecting interference. To output the alert, the circuitry can also be configured to add or modify a label on an aircraft data bus, as described in more detail above with reference to FIG. 2. The alert can indicate, for example, a type of interference, a direction to an interference source, a time of detection of the interference, or a combination thereof.

In some implementations, the digital CRPA 112 can be configured to receive the navigation signals in a first frequency band, and the circuitry of the CRPA controller insert 104 can be configured to receive the digital data via modulated signals in a second frequency band different from the first frequency band and to output the reconstructed modified analog navigation signals in the first frequency band.

Referring again to the illustrative operational example above, received digital data can be demodulated and deserialized to recover the I and Q samples for each of the receiving elements 401 of the digital CRPA 112. Then the I and Q samples can be processed to apply signal nulling algorithms (e.g., via time, frequency and spatial filtering algorithms) for elimination of interference. The processed, sampled signals are combined to create a single baseband signal that is converted to an analog signal that can be up-converted back to the original GNSS frequency. In this way a set of GNSS signals are reconstituted with some or all of the interference energy removed. The reconstituted GNSS signal can then be communicated directly to a conventional GNSS receiver, enabling the use of a CRPA with an existing GNSS receiver without modification to the receiver.

In some implementations, the CRPA controller insert 104 can be configured to receive (e.g., via the first interface 202 of FIG. 2, the second interface 204 of FIG. 2, or both) data indicating an operational mode of the MMR 106. The circuitry of the CRPA controller insert 104 can be configured to determine particular space, time and frequency fileting operations to be performed based on the operational mode of the MMR 106. Being aware of the operational mode of the MMR 106 can enable the system 400 to operate with greater accuracy than without such awareness. For example, certain aspects of space time and frequency filtering may need to be suppressed during operations that require very high accuracy (e.g., a precision approach). As a particular example, signal nulling algorithms based on power minimization can induce GNSS tracking errors if a null is produced close to the direction of arrival of a satellite. Therefore, if the aircraft is operating in a context in which very high accuracy is required, the operating mode of the MMR 106 can identify that such an operation is in effect, and the circuitry of the CRPA controller insert 104 can alter the space, time and frequency operations performed (e.g., by using different algorithms, not generating a null in a particular context, ceasing operation for a period of time, applying appropriate compensations etc.).

Although certain components are illustrated in a particular configuration in the example system 400, more, fewer, and/or different components in a different configuration are possible without departing from the scope of the subject disclosure. For example, the digital CRPA 112 can include more, fewer, and/or different receiving elements 401 than those illustrated in FIG. 4. The digital CRPA 112 can communicate a four-channel digital RF stream to the CRPA controller insert 104, an eight- to twelve-channel stream, etc. As another example, the components, functionality, etc., described with respect to the CRPA controller insert 104 can be wholly or partially incorporated within the MMR 106.

The CRPA controller insert 104 described above with reference to FIGs. 1-4 simplifies and reduce the cost of installation of a digital CRPA capabilities on existing aircraft. For example, the systems 100, 200, 300, 400 use a single cable (e.g., the communication link 110) to connect the digital CRPA 112 to the CRPA controller insert 104. The digital CRPA 112 can replace an existing antenna on an existing design and the CRPA processing can be achieved without mounting an additional line-replaceable unit (LRU) near the antenna array and managing multiple GNSS antenna element connections.

Additionally, the CRPA controller insert 104 described above with reference to FIGs. 1-4 can provide sufficient operating power to a digital CRPA without requiring replacement of an aircraft's existing receiver. The LRU that would be inserted between the MMR 106 and the MMR rack 107 can provide sufficient power to the digital CRPA 112.

Further, the CRPA controller insert 104 described above with reference to FIGs. 1-4 can be operated at appropriate times and at appropriate accuracies depending on flight status. For example, the CRPA controller insert 104 is controllable according to the operating mode or state of the MMR 106.

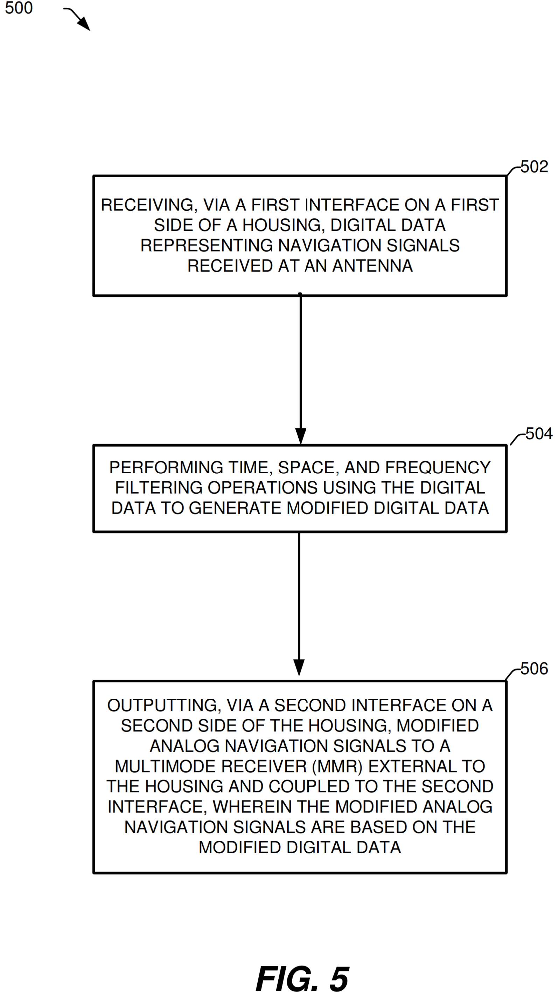

FIG. 5 is a flowchart that illustrates an example of a method 500 for operating a CRPA controller insert (e.g., the CRPA controller insert 104 of FIGs. 1-4), in accordance with some examples of the subject disclosure. The method 500 can be initiated, performed, or controlled by one or more processors executing instructions, or by circuitry configured to cause performance of one or more operations, such as resides within the CRPA controller insert 104 of FIGs. 1-4, or a combination thereof.

In some implementations, the method 500 includes, at block 502, receiving, via a first interface on a first side of a housing, digital data representing navigation signals received at an antenna. For example, CRPA controller insert 104 of FIG. 1 can receive, via the first interface 202 of FIG. 2 on a first side of the housing 205, digital data representing navigation signals received at the digital CRPA 112.

The method 500 includes, at block 504, performing time, space and frequency filtering operations using the digital data to generate modified digital data. For example, the filter(s) 408 of FIG. 4 can perform time, space and frequency filtering operations using the digital data to generate modified digital data. The method 500 includes, at block 506, outputting, via a second interface on a second side of the housing, modified analog navigation signals to a multimode receiver (MMR) external to the housing and coupled to the second interface, wherein the modified analog navigation signals are based on the modified digital data. For example, the CRPA controller insert 104 of FIG. 1 can output, via the second interface 204 of FIG. 2 on a second side of the housing 205, modified analog navigation signals to the MMR 106 external to the housing 205 and coupled to the second interface 204. The modified analog navigation signals are based on the modified digital data.

In some implementations, the method 500 can include more, fewer, and/or different steps without departing from the scope of the subject disclosure. For example, the method 500 can also include, when receiving the digital data includes receiving a first modulated analog signal, generating a sequence of bits based on the first modulated analog signal; generating, based on the sequence of bits, two or more parallel sample streams representing navigation signals received, respectively, at two or more antenna elements of the antenna; performing the time, space and frequency filtering operations based on the two or more parallel sample streams; and modulating a baseband signal based on the modified digital data to generate the modified analog navigation signals.

The methods described above with reference to FIG. 5 can be implemented to realize one or more of the technical advantages described in more detail above. For example, the method 500 can enable the resource-efficient retrofit of a commercial aircraft to take advantage of digital CRPA-enabled anti-jamming and anti-spoofing technologies.

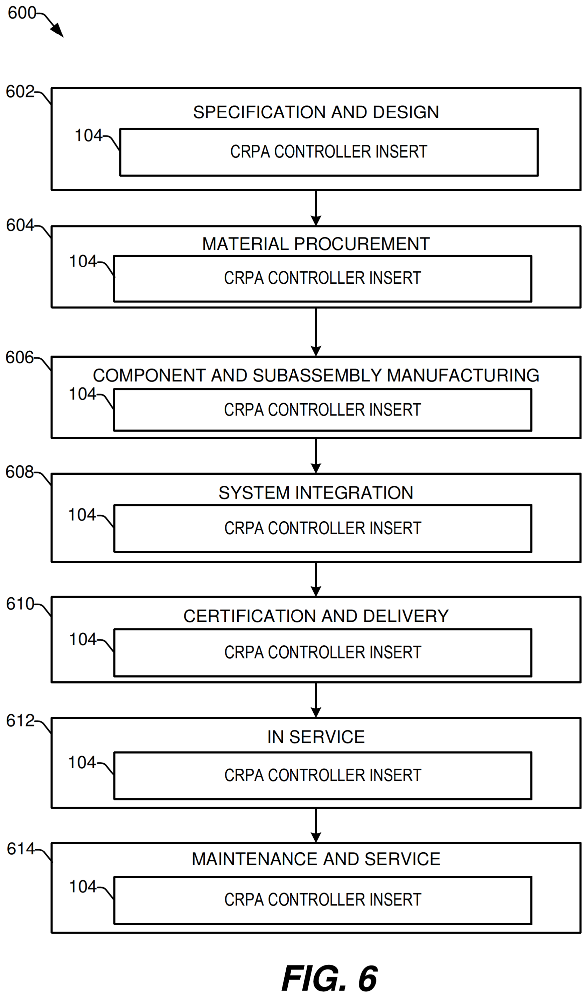

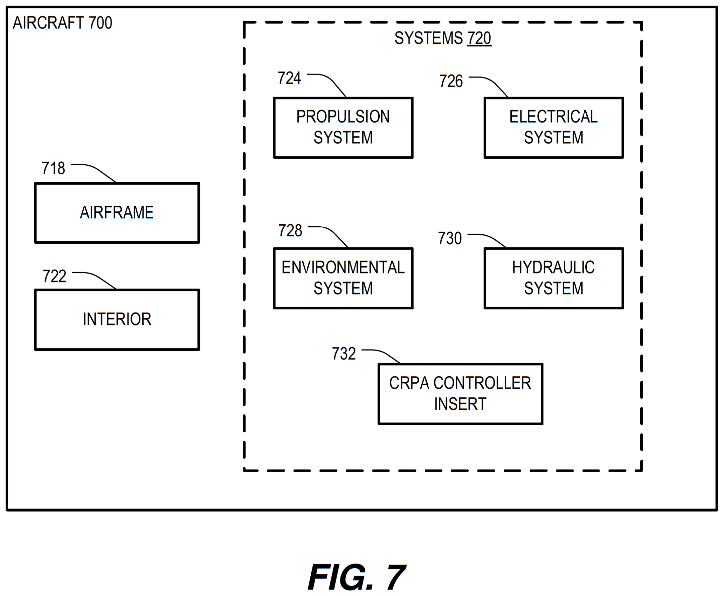

Referring to FIG. 6, a flowchart illustrative of an example of a life cycle of an aircraft that includes a CRPA controller insert 104 is shown and designated 600. The CRPA controller insert 104 can enable resource-efficient retrofit of a commercial aircraft to take advantage of digital CRPA-enabled anti-jamming and anti-spoofing technologies. During pre-production, the exemplary method 600 includes, at 602, specification and design of an aircraft, such as the aircraft of FIGs 1 and 7. During specification and design of the aircraft, the method 600 can include specification and design of the radio device that is configured to provide digital CRPA-enabled anti-jamming and anti-spoofing technologies. At 604, the method 600 includes material procurement, which can include procuring materials for the radio device.

During production, the method 600 includes, at 606, component and subassembly manufacturing and, at 608, system integration of the aircraft. For example, the method 600 can include component and subassembly manufacturing of the CRPA controller insert 104 and system integration of the CRPA controller insert 104. At 610, the method 600 includes certification and delivery of the aircraft and, at 612, placing the aircraft in service. Certification and delivery can include certification of the CRPA controller insert 104 to place the CRPA controller insert 104 in service. While in service by a customer, the aircraft can be scheduled for routine maintenance and service (which can also include the resource-efficient retrofit, modification, reconfiguration, refurbishment, and so on). At 614, the method 600 includes performing maintenance and service on the aircraft, which can include performing maintenance and service on the CRPA controller insert 104. Alternatively, performing maintenance and service on the aircraft can include replacing a radio altimeter with a CRPA controller insert 104 of the present disclosure during a retrofit operation.

Each of the processes of the method 600 can be performed or carried out by a system integrator, a third party, and/or an operator (e.g., a customer). For the purposes of this description, a system integrator can include without limitation any number of aircraft manufacturers and major-system subcontractors; a third party can include without limitation any number of venders, subcontractors, and suppliers; and an operator can be an airline, leasing company, military entity, service organization, and so on.

Aspects of the disclosure can be described in the context of an example of a vehicle. A particular example of a vehicle is an aircraft 700 as shown in FIG. 7. In the example of FIG. 7, the aircraft 700 includes an airframe 718 with a plurality of systems 720 and an interior 722. Examples of the plurality of systems 720 include one or more of a propulsion system 724, an electrical system 726, an environmental system 728, a hydraulic system 730, and a CRPA controller insert 732. Any number of other systems can be included. In the example of FIG. 7, the CRPA controller insert 732 includes a CRPA controller insert that is configured to provide digital CRPA-enabled anti-jamming and anti-spoofing technologies, such as the CRPA controller insert 104 of FIGs. 1-4, the CRPA controller insert included in the aircraft associated with the method 500 of FIG. 5, the CRPA controller insert included in the aircraft associated with the method 600 of FIG. 6, or any combination thereof.

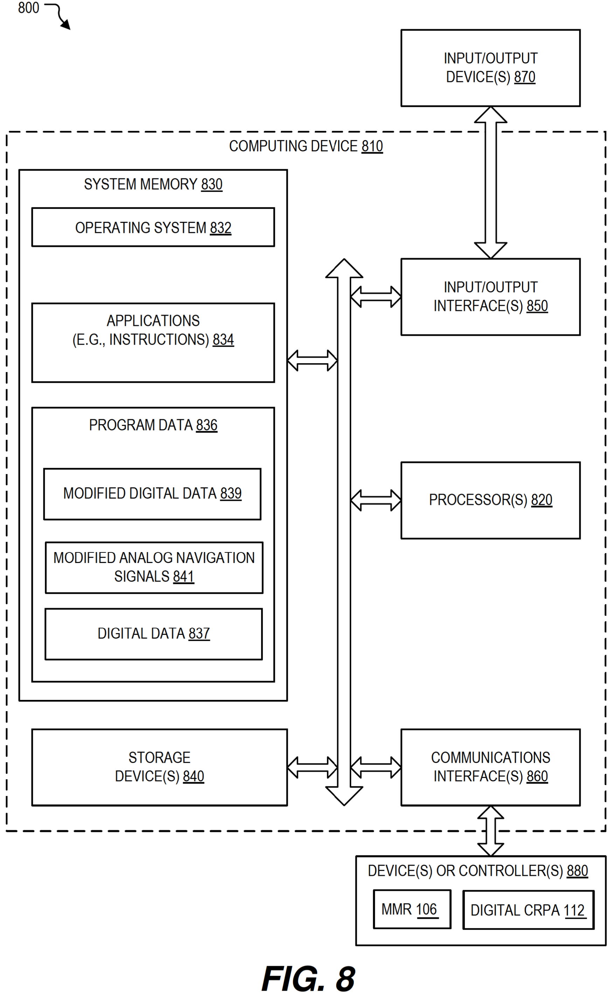

FIG. 8 is a block diagram of a computing environment 800 including a computing device 810 configured to support aspects of computer-implemented methods and computer-executable program instructions (or code) according to the present disclosure. For example, the computing device 810, or portions thereof, is configured to execute instructions to initiate, perform, or control one or more operations described with reference to FIGS. 1-7.

The computing device 810 includes one or more processors 820. The processor(s) 820 are configured to communicate with system memory 830, one or more storage devices 840, one or more input/output interfaces 850, one or more communications interfaces 860, or any combination thereof. The system memory 830 includes volatile memory devices (e.g., random access memory (RAM) devices), nonvolatile memory devices (e.g., read-only memory (ROM) devices, programmable read-only memory, and flash memory), or both. The system memory 830 stores an operating system 832, which can include a basic input/output system for booting the computing device 810 as well as a full operating system to enable the computing device 810 to interact with users, other programs, and other devices. The system memory 830 stores system (program) data 836, such as digital data 837, modified digital data 839, modified analog navigation signals 841, or a combination thereof. The digital data 837 may include or correspond to the digital data received, via the first interface, and representing navigation signals received at the digital CRPA 112 of FIGs. 1-7. The modified digital data 839 may include or correspond to the modified digital data generated by the CRPA controller insert when performing time, space and frequency filtering operations using the digital data 837, as described in more detail above with reference to FIGs. 1-7. The modified analog navigation signals 841 may include or correspond to the modified analog navigation signals output by the CRPA controller insert to the MMR via the second interface, where the modified analog navigation signals 841 are based on the modified digital data 839, as described in more detail above with reference to FIGs. 1-7.

The system memory 830 includes one or more applications 834 (e.g., sets of instructions) executable by the processor(s) 820. As an example, the one or more applications 834 include instructions executable by the processor(s) 820 to initiate, control, or perform one or more operations described with reference to FIGS. 1-7. To illustrate, the one or more applications 834 include instructions executable by the processor(s) 820 to initiate, control, or perform one or more operations described with reference to the CRPA controller insert 104, the circuitry of the CRPA controller insert 104, or a combination thereof.

In a particular implementation, the system memory 830 includes a non-transitory, computer readable medium storing the instructions that, when executed by the processor(s) 820, cause the processor(s) 820 to initiate, perform, or control operations to enable digital CRPA-enabled anti-spoofing and anti-jamming technologies. The operations include receiving, via a first interface on a first side of a housing, digital data representing navigation signals received at an antenna. The operations include performing time, space and frequency filtering operations using the digital data to generate modified digital data. The operations also include outputting, via a second interface on a second side of the housing, modified analog navigation signals to a multimode receiver (MMR) external to the housing and coupled to the second interface, wherein the modified analog navigation signals are based on the modified digital data.

The one or more storage devices 840 include nonvolatile storage devices, such as magnetic disks, optical disks, or flash memory devices. In a particular example, the storage devices 840 include both removable and non-removable memory devices. The storage devices 840 are configured to store an operating system, images of operating systems, applications (e.g., one or more of the applications 834), and program data (e.g., the system program data 836). In a particular aspect, the system memory 830, the storage devices 840, or both, include tangible computer-readable media. In a particular aspect, one or more of the storage devices 840 are external to the computing device 810.

The one or more input/output interfaces 850 enable the computing device 810 to communicate with one or more input/output devices 870 to facilitate user interaction. For example, the one or more input/output interfaces 850 can include a display interface, an input interface, or both. For example, the input/output interface 850 is adapted to receive input from a user, to receive input from another computing device, or a combination thereof. In some implementations, the input/output interface 850 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device 870 includes one or more user interface devices and displays, including some combination of buttons, keyboards, pointing devices, displays, speakers, microphones, touch screens, and other devices.

The processor(s) 820 are configured to communicate with devices or controllers 880 via the one or more communications interfaces 860. For example, the one or more communications interfaces 860 can include a network interface. The devices or controllers 880 can include, for example, the MMR 106 of FIGs. 1-7, the digital CRPA 112 of FIGs. 1-7, or any combination thereof.

In conjunction with the described systems and methods, an apparatus is disclosed that includes means for receiving, via a first interface on a first side of a housing, digital data representing navigation signals received at an antenna. In some implementations, the means for receiving corresponds to the system 100, the system 200, the system 300, the CRPA controller insert 104, the first interface 202, the demodulator 404, one or more other circuits or devices configured to receive digital data, or a combination thereof.

The apparatus also includes means for performing time, space and frequency filtering operations using the digital data to generate modified digital data. For example, the means for performing time, space and frequency filtering operations can correspond to the system 100, the system 200, the system 300, the CRPA controller insert 104, the filter(s) 408, the processor(s) 820, one or more other circuits or devices configured to perform time, space and frequency filtering operations, or a combination thereof.

The apparatus also includes means for outputting, via a second interface on a second side of the housing, modified analog navigation signals to a multimode receiver (MMR) external to the housing and coupled to the second interface, wherein the modified analog navigation signals are based on the modified digital data. For example, the means for outputting can correspond to the system 100, the system 200, the system 300, the system 400, the CRPA controller insert 104, the modulator 410, one or more other circuits or devices configured to output modified analog navigation signals, or a combination thereof.

In some implementations, a non-transitory, computer readable medium stores instructions that, when executed by one or more processors, cause the one or more processors to initiate, perform, or control operations to perform part or all of the functionality described above. For example, the instructions can be executable to implement one or more of the operations or methods of FIGS. 1-8. In some implementations, part or all of one or more of the operations or methods of FIGS. 1-8 can be implemented by one or more processors (e.g., one or more central processing units (CPUs), one or more graphics processing units (GPUs), one or more digital signal processors (DSPs)) executing instructions, by dedicated hardware circuitry, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

Further, the disclosure comprises embodiments according to the following examples:
According to Example 1, a device includes a housing; a first interface on a first side of the housing, wherein the first interface is configured to couple to a multimode receiver (MMR) rack; a second interface on a second side of the housing opposite the first side, wherein the second interface is configured to couple to a MMR external to the housing; and circuitry within the housing configured to receive, via the first interface, digital data representing navigation signals received at an antenna; perform time, space and frequency filtering operations using the digital data to generate modified digital data; and output modified analog navigation signals based on the modified digital data, to the MMR via the second interface.

Example 2 includes the device of Example 1, wherein the circuitry includes a modem configured to receive the digital data, via the first interface, as a first modulated analog signal and to generate a sequence of bits based on the first modulated analog signal. The circuitry includes a deserializer configured to generate, based on the sequence of bits, two or more parallel sample streams representing navigation signals received, respectively, at two or more antenna elements of the antenna. The circuitry includes a time, space and frequency filter(s) configured to perform the time, space and frequency filtering operations based on the two or more parallel sample streams. The circuitry includes a modulator configured to modulate a baseband signal based on the modified digital data to generate the modified analog navigation signals.

Example 3 includes the device of Example 1 or Example 2, wherein, to perform the time, space and frequency filtering operations, the circuitry is configured to spatially filter the digital data such that components of navigation signals from one or more directions, as received at the antenna, are attenuated in the modified analog navigation signals based on the modified digital data.

Example 4 includes the device of any of Examples 1 to 3, wherein the circuitry is further configured to perform interference detection operations based on the digital data.

Example 5 includes the device of Example 4, wherein the circuitry is further configured to output an alert, via the first interface, the second interface, or both, in response to detecting interference.

Example 6 includes the device of Example 5, wherein, to output the alert, the circuitry is configured to add or modify a label on an aircraft data bus.

Example 7 includes the device of any of Examples 5 to 6, wherein the alert indicates a type of interference, a direction to an interference source, a time of detection of the interference, or a combination thereof.

Example 8 includes the device of any of Examples 4 to 7, wherein, to perform the time, space and frequency filtering operations in response to detecting interference, the circuitry is configured to generate a null directed toward an interference source.

Example 9 includes the device of any of Examples 4 to 8, wherein, to perform interference detection operations, the circuitry is further configured to determine, based on the digital data, signal power and an angle of arrival (AOA) of at least a subset of signals of the navigation signals received at the antenna; and compare the signal power, the AOA, or both, of at least the subset of signals to expected signal characteristics for the navigation signals.

Example 10 includes the device of any of Examples 4 to 9, wherein the circuitry is further configured to, in response to detecting that the navigation signals include spoofed navigation signals, output data via the first interface, the second interface, or both, to prevent one or more aircraft systems from using navigation data based on the navigation signals.

Example 11 includes the device of any of Examples 1 to 10, wherein the circuitry is further configured to receive, via the first interface, the second interface, or both, data indicating an operational mode of the MMR; and determine particular time, space and frequency filtering operations to be performed based on the operational mode of the MMR.

Example 12 includes the device of any of Examples 1 to 11, wherein the antenna is configured to receive the navigation signals in a first frequency band, and wherein the circuitry is configured to receive the digital data via modulated signals in a second frequency band different from the first frequency band and to output the modified analog navigation signals in the first frequency band.

Example 13 includes the device of any of Examples 1 to 12, wherein the second interface includes a plurality of connectors including at least one connector configured to couple to an aircraft bus and at least one connector configured to couple to the MMR.

Example 14 includes the device of any of Examples 1 to 13, wherein the first interface includes a first plurality of connectors and the second interface includes a second plurality of connectors, and wherein the first plurality of connectors are complementary to connectors of the MMR rack and the second plurality of connectors are complementary to the first plurality of connectors.

Example 15 includes the device of any of Examples 1 to 14, wherein the antenna includes a digital controlled reception pattern antenna including a plurality of antenna elements configured to receive the navigation signals and to generate the digital data representing the navigation signals.

Example 16 includes the device of any of Examples 1 to 15, wherein the circuitry is further configured to provide power to the antenna via the first interface.

According to Example 17, an aircraft includes an antenna; a multimode receiver (MMR); an MMR rack coupled via a communication link to the antenna; and a line replaceable unit (LRU) disposed between the MMR and the MMR rack. The LRU includes a housing; a first interface coupled to the MMR rack on a first side of the housing; a second interface coupled to the MMR on a second side of the housing; and circuitry within the housing configured to receive, via the first interface, digital data representing navigation signals received at the antenna; perform time, space and frequency filtering operations using the digital data to generate modified digital data; and output modified analog navigation signals based on the modified digital data, to the MMR via the second interface.

Example 18 includes the aircraft of Example 17, wherein the circuitry includes a modem configured to receive the digital data, via the second interface, as a first modulated analog signal and to generate a sequence of bits based on the first modulated analog signal; a deserializer configured to generate, based on the sequence of bits, two or more parallel sample streams representing navigation signals received, respectively, at two or more antenna elements of the antenna; a time, space and frequency filter(s) configured to perform the time, space and frequency filtering operations based on the two or more parallel sample streams; and a modulator configured to modulate a baseband signal based on the modified digital data to generate the modified analog navigation signals.

Example 19 includes the aircraft of Example 17 or Example 18, wherein, to perform the time, space and frequency filtering operations, the circuitry is configured to spatially filter the digital data such that components of navigation signals from one or more directions, as received at the antenna, are attenuated in the modified analog navigation signals based on the modified digital data.

Example 20 includes the aircraft of any of Examples 17 to 19, wherein the circuitry is further configured to perform interference detection operations based on the digital data.

Example 21 includes the aircraft of Example 20, wherein the circuitry is further configured to output an alert, via the first interface, the second interface, or both, in response to detecting interference.

Example 22 includes the aircraft of Example 21, wherein, to output the alert, the circuitry is configured to add or modify a label on an aircraft data bus.

Example 23 includes the aircraft of Example 21 or Example 22, wherein the alert indicates a type of interference, a direction to an interference source, a time of detection of the interference, or a combination thereof.

Example 24 includes the aircraft of any of Examples 20 to 23, wherein, to perform the time, space and frequency filtering operations in response to detecting interference, the circuitry is configured to generate a null directed toward an interference source.

Example 25 includes the aircraft of any of Examples 20 to 24, wherein, to perform interference detection operations, the circuitry is further configured to determine, based on the digital data, signal power and an angle of arrival (AOA) of at least a subset of signals of the navigation signals received at an antenna; and compare the signal power, the AOA, or both, of at least the subset of signals to expected signal characteristics for the navigation signals.

Example 26 includes the aircraft of any of Examples 20 to 25, wherein the circuitry is further configured to, in response to detecting that the navigation signals include spoofed navigation signals, output data via the first interface, the second interface, or both, to prevent one or more aircraft systems from using navigation data based on the navigation signals.

Example 27 includes the aircraft of any of Examples 17 to 26, wherein the circuitry is further configured to receive, via the first interface, the second interface, or both, data indicating an operational mode of the MMR; and determine particular time, space and frequency filtering operations to be performed based on the operational mode of the MMR.

Example 28 includes the aircraft of any of Examples 17 to 27, wherein the antenna is configured to receive the navigation signals in a first frequency band, and wherein the circuitry is configured to receive the digital data via modulated signals in a second frequency band different from the first frequency band and to output the modified analog navigation signals in the first frequency band.

Example 29 includes the aircraft of any of Examples 17 to 28, wherein the second interface includes a plurality of connectors including at least one connector configured to couple to an aircraft bus and at least one connector configured to couple to the antenna.

Example 30 includes the aircraft of any of Examples 17 to 29, wherein the first interface includes a first plurality of connectors and the second interface includes a second plurality of connectors, and wherein the first plurality of connectors are complementary to connectors of the MMR rack and the second plurality of connectors are complementary to the first plurality of connectors.

Example 31 includes the aircraft of any of Examples 17 to 30, wherein the antenna includes a digital controlled reception pattern antenna including a plurality of antenna elements configured to receive the navigation signals and to generate the digital data representing the navigation signals.

Example 32 includes the aircraft of any of Examples 17 to 31, wherein the circuitry is further configured to provide power to the antenna via the second interface.

Example 33 includes the aircraft of any of Examples 17 to 32, wherein the communication link between the antenna and the MMR rack includes a coaxial cable.

Example 34 includes the aircraft of any of Examples 17 to 33, wherein the antenna includes multiple antenna elements; one or more digitizers configured to generate digital representations of signals received at the antenna elements; one or more serializers configured to generate a sample stream based on the digital representations; and a modem configured to communicate the sample stream to the LRU via the communication link.

According to Example 35, a method includes receiving, via a first interface on a first side of a housing, digital data representing navigation signals received at an antenna; performing time, space and frequency filtering operations using the digital data to generate modified digital data; and outputting, via a second interface on a second side of the housing, modified analog navigation signals to a multimode receiver (MMR) external to the housing and coupled to the second interface, wherein the modified analog navigation signals are based on the modified digital data.

Example 36 includes the method of Example 35, wherein receiving the digital data includes receiving a first modulated analog signal, and the method further includes generating a sequence of bits based on the first modulated analog signal; generating, based on the sequence of bits, two or more parallel sample streams representing navigation signals received, respectively, at two or more antenna elements of the antenna; performing the time, space and frequency filtering operations based on the two or more parallel sample streams; and modulating a baseband signal based on the modified digital data to generate the modified analog navigation signals.

Example 37 includes the method of Example 35 or Example 36, wherein performing the time, space and frequency filtering operations includes spatially filtering the digital data such that components of navigation signals from one or more directions, as received at the antenna, are attenuated in the modified analog navigation signals based on the modified digital data.

Example 38 includes the method of any of Examples 35 to 37 and further includes performing interference detection operations based on the digital data.

Example 39 includes the method of Example 38 and further includes outputting an alert, via the first interface, the second interface, or both, in response to detecting interference.

Example 40 includes the method of Example 40, wherein outputting the alert includes adding or modifying a label on an aircraft data bus.

Example 41 includes the method of Example 39 or Example 40, wherein the alert indicates a type of interference, a direction to an interference source, a time of detection of the interference, or a combination thereof.

Example 42 includes the method of any of Examples 38 to 41, wherein performing the time, space and frequency filtering operations in response to detecting interference includes generating a null directed toward an interference source.

Example 43 includes the method of any of Examples 38 to 42, wherein performing interference detection operations includes determining, based on the digital data, signal power and an angle of arrival (AOA) of at least a subset of signals of the navigation signals received at an antenna; and comparing the signal power, the AOA, or both, of at least the subset of signals to expected signal characteristics for the navigation signals.

Example 44 includes the method of any of Examples 38 to 43 and further includes, in response to detecting that the navigation signals include spoofed navigation signals, outputting data via the first interface, the second interface, or both, to prevent one or more aircraft systems from using navigation data based on the navigation signals.

Example 45 includes the method of any of Examples 35 to 44, and further includes receiving, via the first interface, the second interface, or both, data indicating an operational mode of the MMR; and determining particular time, space and frequency filtering operations to be performed based on the operational mode of the MMR.

Example 46 includes the method of any of Examples 35 to 45, and further includes receiving, at the antenna, the navigation signals in a first frequency band; receiving the digital data via modulated signals in a second frequency band different from the first frequency band; and outputting the modified analog navigation signals in the first frequency band.

Example 47 includes the method of any of Examples 35 to 46, and further includes receiving the navigation signals; and generating the digital data representing the navigation signals.

Example 48 includes the method of any of Examples 35 to 47, and further includes providing power to the antenna via the second interface.

## Claims

1. A device (104) comprising:
a housing (205);
a first interface (202) on a first side of the housing, wherein the first interface is configured to couple to a multimode receiver, 'MMR', rack (107);
a second interface (204) on a second side of the housing opposite the first side, wherein the second interface is configured to couple to an MMR (106) external to the housing; and
circuitry within the housing configured to:
receive, via the first interface, digital data (837) representing navigation signals received at an antenna (112);
perform time, space and frequency filtering operations using the digital data to generate modified digital data (839); and
output modified analog navigation signals (841), based on the modified digital data, to the MMR via the second interface.

2. The device of claim 1, wherein the circuitry comprises:
a modem (404) configured to receive the digital data, via the first interface, as a first modulated analog signal and to generate a sequence of bits based on the first modulated analog signal;
a deserializer (406) configured to generate, based on the sequence of bits, two or more parallel sample streams representing navigation signals received, respectively, at two or more antenna elements of the antenna;
a filter (408) configured to perform the time, space and frequency filtering operations based on the two or more parallel sample streams; and
a modulator (410) configured to modulate a baseband signal based on the modified digital data to generate the modified analog navigation signals.

3. The device of claim 1 or 2, wherein, to perform the time, space and frequency filtering operations, the circuitry is configured to spatially filter the digital data such that components of navigation signals from one or more directions, as received at the antenna, are attenuated in the modified analog navigation signals based on the modified digital data.

4. The device of any one of claims 1 to 3, wherein the circuitry is further configured to perform interference detection operations based on the digital data.

5. The device of claim 4, wherein, to perform the time, space and frequency filtering operations in response to detecting interference, the circuitry is configured to generate a null directed toward an interference source.

6. The device of claim 4 or 5, wherein, to perform interference detection operations, the circuitry is further configured to:
determine, based on the digital data, signal power and an angle of arrival, 'AOA', of at least a subset of signals of the navigation signals received at the antenna; and
compare the signal power, the AOA, or both, of at least the subset of signals to expected signal characteristics for the navigation signals.

7. The device of any one of claims 4 to 6, wherein the circuitry is further configured to, in response to detecting that the navigation signals include spoofed navigation signals, output data via the first interface, the second interface, or both, to prevent one or more aircraft systems from using navigation data based on the navigation signals.

8. The device of any one of claims 1 to 7, wherein the circuitry is further configured to:
receive, via the first interface, the second interface, or both, data indicating an operational mode of the MMR; and
determine particular time, space and frequency filtering operations to be performed based on the operational mode of the MMR.

9. The device of any one of claims 1 to 8, wherein the antenna is configured to receive the navigation signals in a first frequency band, and wherein the circuitry is configured to receive the digital data via modulated signals in a second frequency band different from the first frequency band and to output the modified analog navigation signals in the first frequency band.

10. The device of any one of claims 1 to 9, wherein the antenna includes a digital controlled reception pattern antenna, 'CRPA', including a plurality of antenna elements (401) configured to receive the navigation signals and to generate the digital data representing the navigation signals.

11. The device of any one of claims 1 to 10, wherein the circuitry is further configured to provide power to the antenna via the first interface.

12. An aircraft (102A, 102B) comprising:
an antenna (112);
a multimode receiver, 'MMR', (106);
an MMR rack (107) coupled via a communication link (110) to the antenna; and
a line-replaceable unit, 'LRU', (104) disposed between the MMR and the MMR rack, the LRU including:
a housing (205);
a first interface (202) coupled to the MMR rack on a first side of the housing;
a second interface (204) coupled to the MMR on a second side of the housing;
and
circuitry within the housing configured to:
receive, via the first interface, digital data (837) representing navigation signals received at the antenna;
perform time, space and frequency filtering operations using the digital data to generate modified digital data (839); and
output modified analog navigation signals, based on the modified digital data, to the MMR via the second interface.

13. The aircraft of claim 12, wherein the circuitry comprises:
a modem (404) configured to receive the digital data, via the second interface, as a first modulated analog signal and to generate a sequence of bits based on the first modulated analog signal;
a deserializer (406) configured to generate, based on the sequence of bits, two or more parallel sample streams representing navigation signals received, respectively, at two or more antenna elements of the antenna;
a filter (408) configured to perform the time, space and frequency filtering operations based on the two or more parallel sample streams; and
a modulator (410) configured to modulate a baseband signal based on the modified digital data to generate the modified analog navigation signals.

14. The aircraft of claim 13, wherein, to perform the time, space and frequency filtering operations, the circuitry is configured to spatially filter the digital data such that components of navigation signals from one or more directions, as received at the antenna, are attenuated in the modified analog navigation signals based on the modified digital data.

15. A method (500) comprising:
receiving (502), via a first interface (202) on a first side of a housing (205), digital data (837) representing navigation signals received at an antenna (112);
performing (504) time, space and frequency filtering operations using the digital data to generate modified digital data (839); and
outputting (506), via a second interface (204) on a second side of the housing, modified analog navigation signals (841) to a multimode receiver, 'MMR', external to the housing and coupled to the second interface, wherein the modified analog navigation signals are based on the modified digital data.
